(19) Europäisches Patentamt

European Patent Office

Office européen des brevets

(11) **EP 0 632 255 B1**

(12) **EUROPÄISCHE PATENTSCHRIFT**

(45) Veröffentlichungstag und Bekanntmachung des Hinweises auf die Patenterteilung:
**21.05.1997   Patentblatt 1997/21**

(51) Int Cl.6: **G01G 11/08**

(21) Anmeldenummer: **93110539.9**

(22) Anmeldetag: **01.07.1993**

(54) **Verfahren zur Steuerung der Dosierleistung einer Differentialdosierwaage**

Methods to control feedrate in a loss-in-weight feeder

Procédés de commande du taux d'alimentation dans un dosomètre différentiel

(84) Benannte Vertragsstaaten:
**AT BE CH DE DK ES FR GB IE IT LI LU NL PT**

(43) Veröffentlichungstag der Anmeldung:
**04.01.1995   Patentblatt 1995/01**

(73) Patentinhaber: **GERICKE GMBH**
**D-78239 Rielasingen (DE)**

(72) Erfinder: **Hlavica, Karel Dr. Dipl. El.-Ing**
**CH-5300 Vogelsang-Turgi (CH)**

(74) Vertreter: **Zeitler & Dickel**
**Patentanwälte**
**European Patent Attorneys**
**Herrnstrasse 15**
**80539 München (DE)**

(56) Entgegenhaltungen:
**EP-A- 0 291 553          EP-A- 0 425 735**
**DE-A- 2 658 252          DE-A- 2 754 527**
**DE-A- 3 300 911**

## Beschreibung

Die Erfindung betrifft Verfahren zur Steuerung der Dosierleistung einer Differentialdosierwaage gemäß dem Oberbegriff des Anspruchs 1 oder 4.

Differentialdosierwaagen werden zur genauen Dosierung von Materialien, insbesondere von Schüttgut, verwendet. Die Dosierleistung, d.h. die pro Zeiteinheit abgegebene Materialmenge, beispielsweise Schüttgut, wird dabei dadurch bestimmt, daß das sich im Behälter der Differentialdosierwaage befindende Schüttgut laufend gewogen und die Änderung der Masse pro Zeiteinheit bestimmt wird.

Um die gewünschte Dosierleistung möglichst genau einhalten zu können, verfügen Differentialdosierwaagen über eine entsprechende Dosierregelung, wobei die Ist-Dosierleistung laufend gemessen, mit der Soll-Dosierleistung verglichen und bei einer Abweichung ein Stellsignal abgegeben wird, das die Fördergeschwindigkeit des Dosierorgans, beispielsweise die Drehzahl einer Förderschnecke, entsprechend beeinflußt.

Wenn sich somit die Differentialdosierwaage im Regelungsbetrieb - im Gegensatz zum Steuerungsbetrieb - befindet, ist mit Hilfe dieser Regelung eine genaue Dosierung im laufenden Betrieb möglich. In der Start- und Wiederbefüllungsphase sowie bei Änderungen der Soll-Dosierleistung und bei externen Störungen, die das Gewicht des Behälters verfälschen, ist der Regelungsbetrieb entweder unmöglich oder führt zu erhöhten Ungenauigkeiten aufgrund des Totzeiten-(Trägheits-) und Schwingungsproblems bzw. falscher Gewichts-Meßwerte. In diesen Phasen wird daher bevorzugt vom Regelungsbetrieb auf Steuerungsbetrieb umgeschaltet, wobei die Fördergeschwindigkeit des Dosierorgans nach einem vorbestimmten Schema eingestellt wird.

Aus der US-PS 42 10 963 bzw. DE-OS 2 658 252 oder DE-OS 2 754 527 ist es bekannt, das Dosierorgan während der Wiederbefüllungsphase derart anzusteuern, daß die während dieser Phase einzuhaltende Fördergeschwindigkeit derjenigen Fördergeschwindigkeit entspricht, die zuletzt vor der Wiederbefüllungsphase vorgelegen hatte. Bei dieser bekannten Ansteuerungsart kann es jedoch zu starken Abweichungen von der gewünschten Dosierleistung kommen. Diese Abweichungen werden u.a. dadurch verursacht, daß aufgrund der zunehmenden Füllhöhe im Behälter während der Wiederbefüllung eine Verdichtung des Schüttgutes im Bereich des Dosierorgans auftritt, die bei konstanter Drehzahl zu einer Erhöhung der Dosierleistung führt. Außerdem wird die Dosierleistung dadurch beeinflußt, daß auch die Füllung des Dosierorgans von der Füllhöhe im Behälter abhängig ist.

Aus der DE-PS 33 00 911 ist es bekannt, den Einfluß unterschiedlicher Füllhöhen während der Wiederbefüllungsphase dadurch zu berücksichtigen und zu kompensieren, daß während der vorausgehenden, geregelten Entleerungsphase das Gewicht des Schüttgutes im Behälter und die zur Aufrechterhaltung einer konstanten Dosierleistung erforderlichen, an das Dosierorgan abgegebenen Stellsignalwerte (Drehzahlwerte) periodisch gemessen und abgespeichert werden. Während der Wiederbefüllungsphase wird das Gewicht des Schüttgutes ebenfalls periodisch gemessen, und es wird dem jeweiligen Gewichtswert derjenige Stellsignalwert zugeordnet sowie zur Steuerung verwendet, der dem gleichen, während der vorausgehenden Entleerungsphase gemessenen Gewichtswert entspricht.

Dieses bekannte Verfahren liefert zwar zufriedenstellende Ergebnisse, wenn während der Wiederbefüllungsphase die gleiche Dosierleistung wie während der vorausgehenden Entleerungsphase vorliegen soll. Im Falle einer Änderung der Soll-Dosierleistung läßt sich mit diesem bekannten Verfahren jedoch keine zufriedenstellende Genauigkeit der Dosierleistung erzielen, weil die Stellwerte wegen der unterschiedlichen Soll-Dosierleistung unterschiedlich groß sein müssen.

Der Erfindung liegt daher die Aufgabe zugrunde, ein Steuerungsverfahren der im Oberbegriff des Anspruchs 1 genannten Art zu schaffen, das auf einfache Weise eine verbesserte Dosiergenauigkeit im Steuerungsbetrieb, insbesondere auch bei einer Änderung der Soll-Dosierleistung, ermöglicht.

Diese Aufgabe wird erfindungsgemäß durch die Merkmale des Anspruchs 1 oder des Anspruchs 4 gelöst. Vorteilhafte Ausführungsformen der Erfindung sind in den weiteren Ansprüchen beschrieben.

Beim erfindungsgemäßen Verfahren wird zunächst ein geräte- und produktspezifisches Dosierleistungsprofil gemessen und gespeichert oder manuell in die Dosiersteuerung eingegeben, das aus unterschiedlichen Ist-Dosierwerten und den zum Erreichen dieser Ist-Dosierwerte erforderlichen Stellsignalwerten besteht, wobei als zusätzlicher Parameter der jeweilige Behälterpegel festgehalten wird. Zusätzlich wird eine Füllhöhenkompensationscharakteristik gemessen und gespeichert oder manuell in die Dosiersteuerung eingegeben, die aus zur Aufrechterhaltung einer oder mehrerer konstanter Dosierleistungen erforderlichen Stellsignalwerten in Abhängigkeit von unterschiedlichen Behälterpegeln besteht.

Beim erfindungsgemäßen Steuerungsverfahren werden diese beiden Charakteristiken, d.h. das Dosierleistungsprofil und die Füllhöhenkompensationscharakteristik, miteinander verbunden, indem zunächst der Differenzwert zwischen demjenigen Stellsignalwert ermittelt wird, der in der Füllhöhenkompensationscharakteristik dem als Parameter gespeicherten Behälterpegel des Dosierleistungsprofils zugeordnet ist und demjenigen Stellsignal, der einem tatsächlichen Behälterpegel zugeordnet ist. Anschließend wird die Fördergeschwindigkeit mit einem solchen Stellsignalwert gesteuert, der aufgrund des Dosierleistungsprofils einer vorgebbaren Dosierleistung zugeordnet und um den aus der Füllhöhenkompensationscharakteristik ermittelten Differenzwert korrigiert ist.

Bei dem erfindungsgemäßen Verfahren wird somit neben der Füllhöhenkompensationscharakteristik auch das Dosierleistungsprofil berücksichtigt, so daß eine Füllhöhenkompensation während des Steuerungsbetriebes nicht nur bei gleichbleibenden, sondern auch bei sich ändernden Soll-Dosierleistungen ermöglicht wird.

Die Füllhöhenkompensationscharakteristik kann entweder manuell eingegeben oder automatisch ermittelt werden. Dies erfolgt bei einer konstanten Dosierleistung. Soll die Soll-Dosierleistung im späteren Steuerungsbetrieb von dieser konstanten Dosierleistung abweichen, kann diese Abweichung dadurch berücksichtigt werden, daß die Abhängigkeit der Füllhöhenkompensationskurve von den jeweiligen Leistungen bestimmt wird. Hieraus ergibt sich eine Berichtigungsfunktion für die obengenannten Differenzwerte. Eine solche Berichtigungsfunktion kann beispielsweise eine lineare Funktion sein. Vorteilhafterweise wird der Stellsignal-Differenzwert dabei mittels eines Berichtigungsfaktors modifiziert, der aus dem Verhältnis einer bestimmten Dosierleistung zu derjenigen konstanten Dosierleistung besteht, bei der die Füllhöhenkompensationscharakteristik ermittelt wurde.

Wie obenstehend beschrieben, werden aus der Füllhöhenkompensationschrakteristik Stellsignal-Differenzwerte zur Korrektur des Stellsignalwertes ermittelt, um unterschiedliche Behälterpegel berücksichtigen zu können. Der jeweilige Stellsignal-Differenzwert kann dabei in einem einzigen Schritt ermittelt werden, indem der dem Dosierleistungsprofil zugrundeliegende Behälterpegel mit dem tatsächlichen Behälterpegel bzw. die zugeordneten Stellsignalwerte verglichen werden.

Stattdessen kann es jedoch auch vorteilhaft sein, die Ermittlung des Stellsignal-Differenzwertes in zwei Schritten durchzuführen. Dies erfolgt vorteilhafterweise dadurch, daß zunächst das bei unterschiedlichen Behälterpegeln ermittelte Dosierleistungsprofil mittels aus der Füllhöhenkompensationscharakteristik gewonnener Normier-Korrekturwerte auf einen konstanten Normier-Behälterpegel normiert wird. Der Normier-Korrekturwert bildet dabei einen ersten Anteil am Stellsignal-Differenzwert. Anschließend wird aus der Füllhöhenkompensationscharakteristik ein Rest-Korrekturwert für die Korrektur des Stellsignals auf der Basis des normierten Dosierleistungsprofils ermittelt, der zusammen mit dem entsprechenden Normier-Korrekturwert den gesamten Differenzwert zur Korrektur des Stellsignals ergibt. Hierbei wird der Rest-Korrekturwert aus der Differenz zwischen demjenigen Stellsignalwert ermittelt, der dem Normier-Behälterpegel zugeordnet ist und demjenigen Stellsignalwert, der einem tatsächlichen Behälterpegel zugeordnet ist.

Gemäß einer alternativen Ausführungsform der Erfindung wird die Aufgabe durch die Merkmale des Anspruchs 4 gelöst. Diese alternative Ausführungsform unterscheidet sich von der Ausführungsform gemäß Patentanspruch 1 lediglich dadurch, daß für die Füllhöhenkompensationscharakteristik Dosierleistungs-/Behälterpegelwerte bei einem oder mehreren konstanten Stellsignalwerten ermittelt werden und nicht Stellsignal-/Behälterpegelwerte bei einer oder mehreren konstanten Dosierleistungen. Die Füllhöhenkompensationskurve der alternativen Ausführungsform gibt somit die Änderung der Ist-Dosierleistung in Abhängigkeit von unterschiedlichen Behälterpegeln bei einem konstanten Stellsignalwert an. Aus dieser Füllhöhenkompensationscharakteristik wird ein Dosierleistungs-Differenzwert ermittelt, der zur Korrektur des Dosierleistungsprofils und damit zur Korrektur des Stellsignalwertes bei einer vorgegebenen Soll-Dosierleistung verwendet wird.

Vorteilhafterweise wird die Schüttgutdichte des zu dosierenden Materials als zusätzlicher Parameter im Dosierleistungsprofil abgespeichert und zur Korrektur des Stellsignalwertes verwendet.

Vorteilhafterweise werden zur Bestimmung des Dosierleistungsprofils drei bis zehn, insbesondere sechs, vorzugsweise regelmäßig beabstandete, Ist-Dosierleistungswerte und die zum Erreichen dieser Ist-Dosierleistungswerte erforderlichen Stellsignalwerte abgespeichert und weitere, insbesondere dazwischenliegende Werte durch, insbesondere lineare, Inter- bzw. Extrapolation bestimmt. Dies ermöglicht eine rasche Ermittlung des Dosierleistungsprofils und einen kleinen Speicherbedarf.

Gemäß einer vorteilhaften Ausführungsform der Erfindung wird mindestens ein aus dem Dosierleistungsprofil und der Füllhöhenkompensationscharakteristik bestimmter, aus der vorgebbaren Dosierleistung, dem dieser zugeordneten korrigierten Stellsignalwert und dem Behälterpegel bestehender theoretischer Arbeitspunkt mit mindestens einem während des Regelungsbetriebes gemessenen Arbeitspunkt verglichen, der aus der gemessenen Ist-Dosierleistung, dem tatsächlichen Stellsignalwert des Reglers und dem gemessenen Behälterpegel besteht. Es wird sodann ein die Abweichung des theoretischen vom gemessenen Arbeitspunkt berücksichtigender Korrekturwert für die weitere Korrektur des theoretischen Stellsignalwertes für den Steuerungsbetrieb gebildet und/oder ein Alarm abgegeben, wenn die Abweichung des theoretischen Arbeitspunktes vom gemessenen Arbeitspunkt einen vorgebbaren Maximalwert überschreitet.

Durch ständige Messung und Vergleich zwischen dem theoretischen und dem tatsächlichen Arbeitspunkt kann der theoretische Arbeitspunkt an sich ändernde Produkteigenschaften, beispielsweise sich ändernde Schüttgutdichten, angepaßt werden. Dies erfolgt beispielsweise dadurch, daß im Betrieb laufend der tatsächlich festgestellte Stellsignalwert für die gemessene Ist-Dosierleistung mit dem theoretischen Stellsignalwert verglichen wird, der für diese Ist-Dosierleistung von der Maschinensteuerung berechnet werden sollte, woraufaus dem Verhältnis tatsächlicher Stell- signalwert/theoretischer Stellsignalwert eine Korrekturkonstante für das Dosierleistungsprofil berechnet wird. Diese Anpassung des theoretischen Arbeitspunktes führt während des Steuerungsbetriebs zu einer weiteren Erhöhung der Dosiergenauigkeit.

Die ergänzend oder alternativ hierzu vorgesehene Überwachung der Abweichung zwischen theoretischem und gemessenem Arbeitspunkt hat ihre Bedeutung darin, daß z.B. Lecks in der Wiederbefüllungsklappe einer Behälterbefüllvorrichtung und damit verbundene Ungenauigkeiten während des Regelungsbetriebes entdeckt werden können. Rieselt das Produkt aufgrund einer undichten Wiederbefüllungsklappe in den Behälter nach, so kommt es ohne eine derartige Überwachung zu einer zu hohen Dosierung, da das Gewicht im Behälter nicht entsprechend der tatsächlichen Dosierleistung abnimmt und die Differentialdosierwaage entsprechend nachregelt. Mit Hilfe des Vergleichs zwischen theoretischem und tatsächlichem Arbeitspunkt unter Berücksichtigung sowohl des Dosierleistungsprofils als auch der Füllhöhenkompensationscharakteristik läßt sich dagegen eine zu starke Verschiebung des tatsächlichen Arbeitspunktes feststellen.

Die Erfindung wird nachfolgend anhand der Zeichnung beispielsweise näher erläutert. In dieser zeigen

Fig. 1    eine schematische Darstellung zur Erläuterung des Prinzips einer bekannten Differentialdosierwaage,

Fig. 2A    eine Diagrammdarstellung der Soll-Dosierleistung über der Zeit,

Fig. 2B    eine Diagrammdarstellung der zur Erreichung der Soll-Dosierleistung von Fig. 2A erforderlichen Stellsignalwerte über der Zeit,

Fig. 3A    eine Diagrammdarstellung eines bei unterschiedlichen Behälterpegeln abgespeicherten Dosierleistungsprofils,

Fig. 3B    eine Diagrammdarstellung einer bei einer konstanten Dosierleistung abgespeicherten Füllhöhenkompensationscharakteristik,

Fig. 4A u. 4B    das Dosierleistungsprofil bzw. die Füllhöhenkompensationscharakteristik von Fig. 3A bzw. 3B zur Verdeutlichung einer alternativen Vorgehensweise bei der Ermittlung des Stellsignal-Differenzwertes,

Fig. 5    eine Diagrammdarstellung von Füllhöhenkompensationscharakteristiken, die unterschiedlichen Dosierleistungen entsprechen und

Fig. 6A u. 6B    Diagrammdarstellungen eines Dosierleistungsprofils und einer Füllhöhenkompensationscharakteristik gemäß einer alternativen Ausführungsform der Erfindung.

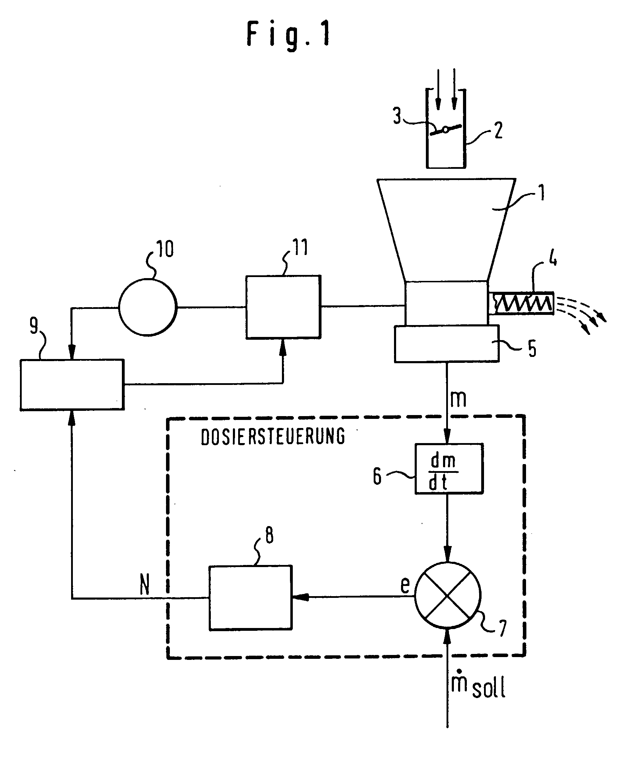

Aus Fig. 1 ist eine Differentialdosierwaage mit einem Behälter 1 ersichtlich, dem über einen Einfüllschacht 2 einer Befüllungsvorrichtung Schüttgut zugeführt werden kann. Eine Klappe 3 innerhalb des Einfüllschachts 2 regelt die Zufuhr des Schüttgutes.

Das Schüttgut wird aus dem Behälter 1 mittels eines Dosierorgans in der Form einer Dosierschnecke 4 mit einer vorgebbaren Dosierleistung ausgetragen. Um die Dosierleistung zu bestimmen, wird das Gewicht des Schüttgutes innerhalb des Behälters 1 laufend mittels einer Waage 5 gemessen und die Gewichtsänderung pro Zeiteinheit in einem Differenzierglied 6 einer Dosiersteuerung berechnet. Diese Ist-Dosierleistung wird mit einer vorgebbaren Soll-Dosierleistung $\dot{m}_{Soll}$ mittels eines Vergleichsglieds 7 verglichen und die Abweichung einem PID-Regler 8 zugeführt, der einen entsprechenden Stellsignalwert N an einen Motorregler 9 abgibt. Der Motorregler 9 vergleicht den Stellsignalwert N mit dem von einem Tachometer 10 eines Antriebsmotors 11 abgegebenen tatsächlichen Drehzahlwert der Dosierschnecke 4 oder des Motors 11 und gibt gegebenenfalls an den Motor 11 ein entsprechendes Stellsignal zur Erhöhung oder Erniedrigung der Dosierschneckendrehzahl ab, um die Ist-Dosierleistung mit der Soll-Dosierleistung in Übereinstimmung zu bringen.

Von diesem Regelungsbetrieb wird beim dargestellten Ausführungsbeispiel während der Startphase, der Wiederbefüllungsphase, bei einer Änderung der Soll-Dosierleistung und während einer Störungsverriegelungsphase auf einen Steuerungsbetrieb umgeschaltet, um eine ungenaue Dosierung zu vermeiden.

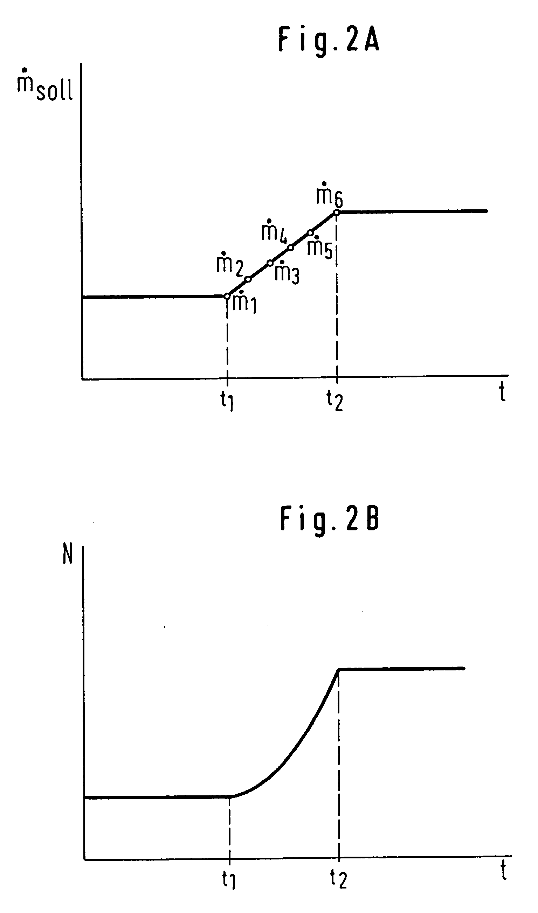

Im Steuerbetrieb kann es erwünscht sein, die Soll-Dosierleistung nach einem vorbestimmten Schema zu ändern. Hierbei kann es sich beispielsweise, wie aus Fig. 2A ersichtlich, um einen konstanten Anstieg der Soll-Dosierleistung zwischen den Zeitpunkten $t_1$ und $t_2$ handeln, wobei die Soll-Dosierleistungen $\dot{m}_1$ bis $\dot{m}_6$ erzielt werden sollen.

Die zur Erreichung derartiger Dosierleistungswerte erforderlichen Stellsignalwerte N sind schematisch in Fig. 2B gezeigt. Wenn ein nachfolgend beschriebenes Dosierleistungsprofil nicht linear ist, ist auch der Verlauf der Stellsignalwerte in Abhängigkeit von der Zeit nicht linear, um eine beispielsweise lineare Rampe nach Fig. 2A zu erreichen.

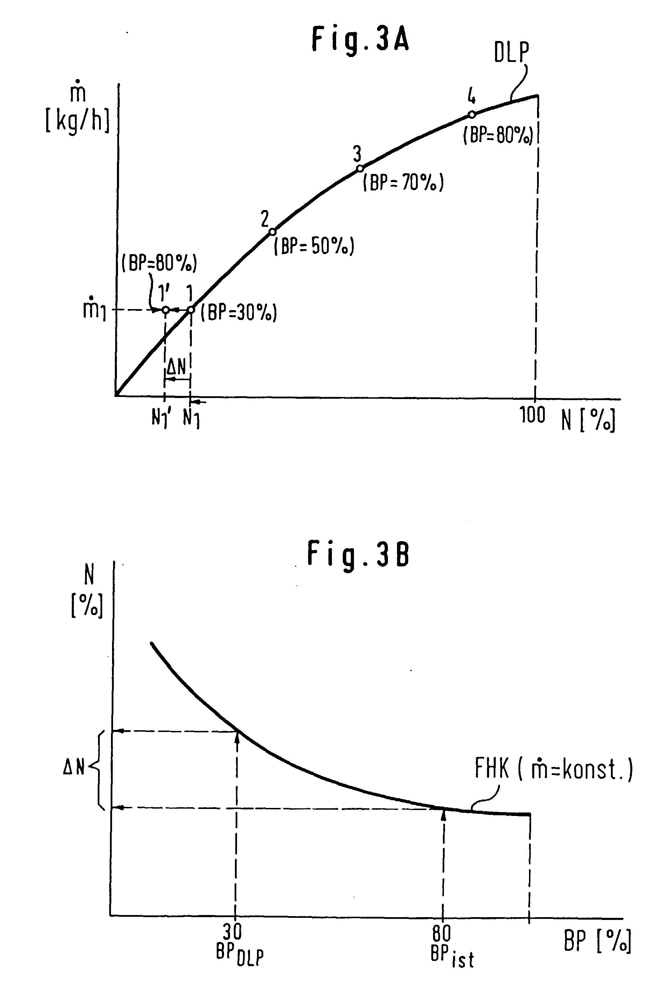

Um die in Fig. 2A dargestellte Rampe der Dosierleistung möglichst genau erreichen zu können, wird zunächst ein in Fig. 3A dargestelltes, von der Differentialdosierwaage 5 und vom Schüttgut abhängiges Dosierleistungsprofil DLP gemessen und in der Dosiersteuerung gespeichert. In Fig. 3A ist das Dosierleistungsprofil DLP in Form eines Diagramms dargestellt, wobei auf der Ordinate die Ist-Dosierleistungen $\dot{m}$ und auf der Abszisse die Soll-Stellsignalwerte $N_{Soll}$ in Prozent des maximalen Soll-Stellsignalwertes aufgetragen sind.

Die Kurve, die im vorliegenden Fall nichtlinear ist, jedoch auch andere, beispielsweise lineare Formen haben kann, gibt an, welche Stellsignalwerte, d.h. Drehzahlen, erforderlich sind, um bei einer bestimmten Differentialdosierwaage und einem bestimmten Schüttgut entsprechende Ist-Dosierleistungen zu erhalten. Eine nicht proportional zur Drehzahl sich vergrößernde Dosierleistung ergibt sich dabei insbesondere daraus, daß bei bestimmten Schneckendosiergeräten die Dosierschnecke mit zunehmender Drehzahl nicht mehr richtig gefüllt wird.

Das Dosierleistungsprofil DLP wird zweckmäßigerweise dadurch bestimmt, daß beispielsweise für vier unterschiedliche Dosierleistungen die dazugehörigen erforderlichen Drehzahlen gemessen und die entsprechenden Werte entweder automatisch in der Dosiersteuerung abgespeichert oder manuell in die Dosiersteuerung eingegeben werden. Diese Werte werden durch die Punkte 1 - 4 in Fig. 3A repräsentiert. Zusätzlich werden auch die dazugehörigen Behälterpegel BP abgespeichert oder eingegeben, bei denen diese Werte erreicht worden sind. Die einzelnen Meßpunkte 1 - 4 des Dosierleistungsprofils DLP werden von der Dosiersteuerung rechnerisch durch beispielsweise lineare Interpolation miteinander verbunden. Im Falle einer linearen Interpolation besteht das Dosierleistungsprofil DLP somit nicht, wie dargestellt, aus einer stetigen Kurve, sondern aus einer Aneinanderreihung einzelner Geraden mit möglicherweise unterschiedlichen Steigungen.

Weiterhin wird in der Dosiersteuerung eine in Fig. 3B dargestellte Füllhöhenkompensationscharakteristik abgespeichert. Die Füllhöhenkompensationscharakteristik, die im vorliegenden Fall nichtlinear ist, jedoch auch andere, beispielsweise lineare Formen haben kann, gibt an, welche Stellsignalwerte $N_{Soll}$ erforderlich sind, um bei unterschiedlichen Behälterpegeln BP konstante Dosierleistungen $\dot{m}$ aufrechtzuerhalten.

Die Füllhöhenkompensationscharakteristik gemäß Fig. 3B wird zweckmäßigerweise dadurch bestimmt, daß während eines vorausgehenden Regelungsbetriebs beispielsweise fünf Stellsignalwerte bei konstanter Dosierleistung und die dazugehörigen Behälterpegel BP gemessen werden. Die Werte können daraufhin entweder manuell in die Dosiersteuerung eingegeben oder automatisch abgespeichert werden. Aus diesen Werten wird die Füllhöhenkompensationskurve von der Dosiersteuerung automatisch berechnet.

Die weitere Vorgehensweise wird im folgenden anhand des Meßpunktes 1 von Fig. 3A erläutert. Dieser Meßpunkt, d.h. die Dosierleistung $\dot{m}_1$ und der Stellsignalwert $N_1$, wurde bei einem Behälterpegel von 30 % ermittelt und abgespeichert. Wenn nun im Steuerungsbetrieb bei Vorgabe der Dosierleistung $\dot{m}_1$ der Behälterpegel nicht 30 %, sondern beispielsweise 80 % beträgt, so werden aus der Füllhöhenkompensationscharakteristik von Fig. 3B zunächst diejenigen Stellsignalwerte ermittelt, die Behälterpegeln von 30 % und 80 % zugeordnet sind. Die Differenz aus diesen beiden Stellsignalwerten ergibt den Stellsignal-Differenzwert $\Delta N$.

Mittels dieses Differenzwertes $\Delta N$ wird nun der Stellsignalwert $N_1$ des Dosierleistungsprofils DLP entsprechend korrigiert, so daß ein korrigierter Stellwert $N'_1$ erhalten wird, mit dem die Fördergeschwindigkeit des Dosierorgans gesteuert wird.

Die Stellsignalwerte N für andere Punkte des Dosierleistungsprofils werden in entsprechender Weise korigiert.

Mit Hilfe des Dosierleistungsprofils DLP ist es auf diese Weise möglich, für die verschiedensten Punkte auf der Kurve DLP, d.h. für die verschiedensten Dosierleistungen $\dot{m}$, korrigierte Stellsignalwerte zu erhalten, mit denen die gewünschten Dosierleistungen wesentlich genauer als bisher erhalten werden können. Diese Dosiergenauigkeit kann jedoch nochmals dadurch gesteigert werden, daß der Fehler berücksichtigt wird, der darin liegt, daß die Füllhöhenkompensationscharakteristik von Fig. 3B lediglich für eine einzige konstante Dosierleistung $\dot{m}$ genaue Stellsignal-Differenzwerte $\Delta N$ liefert, nicht jedoch für andere, davon abweichende Dosierleistungen.

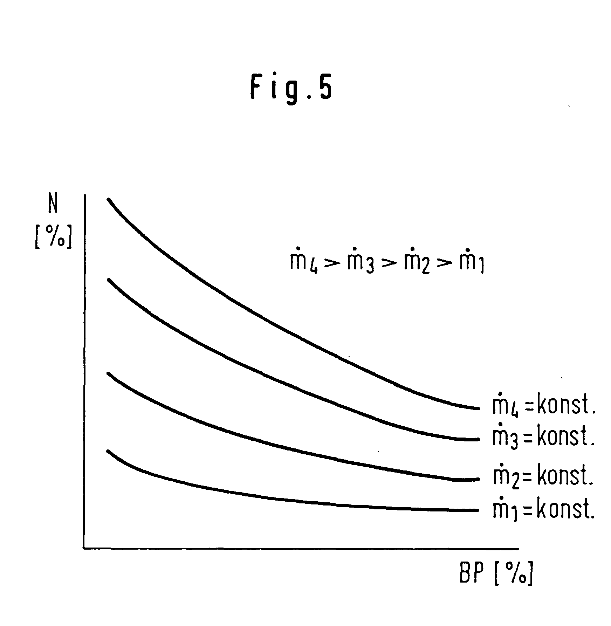

Für verschiedene Dosierleistungen könnten sehr genaue Stellsignal-Differenzwerte $\Delta N$ theoretisch dadurch ermittelt werden, daß für jede denkbare Dosierleistung eine eigene Füllhöhenkompensationscharakteristik aufgenommen und gespeichert wird, wie in Fig. 5 dargestellt. Hierfür wäre jedoch ein zu hoher Rechen- und Speicheraufwand erforderlich. Unterschiedliche Dosierleistungen werden in der Füllhöhenkompensationscharakteristik daher zweckmäßigerweise dadurch berücksichtigt, daß eine einzige oder einige wenige Füllhöhenkompensationskurven aufgenommen und abgespeichert und hiervon abweichende Dosierleistungen durch eine Berichtigungsfunktion berücksichtigt werden. Diese Berichtigungsfunktion kann darin bestehen, daß ein Berichtigungsfaktor aus dem Verhältnis einer bestimmten Dosierleistung zu derjenigen Dosierleistung gebildet wird, bei der die Füllhöhenkompensationscharakteristik aufgenommen wurde. Ein derartiger Berichtigungsfaktor geht von der meist zutreffenden Annahme aus, daß der Stellsignal-Differenzwert $\Delta N$ proportional zur Dosierleistung ist. Mathematisch kann der an die unterschiedlichen Dosierleistungen angepaßte Stellsignal-Differenzwert $\Delta N_{berichtigt}$ durch die folgende Gleichung ausgedrückt werden:

$$\Delta N_{berichtigt} = \Delta N \cdot \dot{m}/\dot{m}_{FHK}$$

wobei $\dot{m}$ eine bestimmte Dosierleistung ist, die von derjenigen sierleistung abweicht, bei der die Füllhöhenkompensationscharakteristik ermittelt wurde, und $\dot{m}_{FHK}$ diejenige Dosierleistung ist, bei der die Füllhöhenkompensationscharakteristik ermittelt wurde.

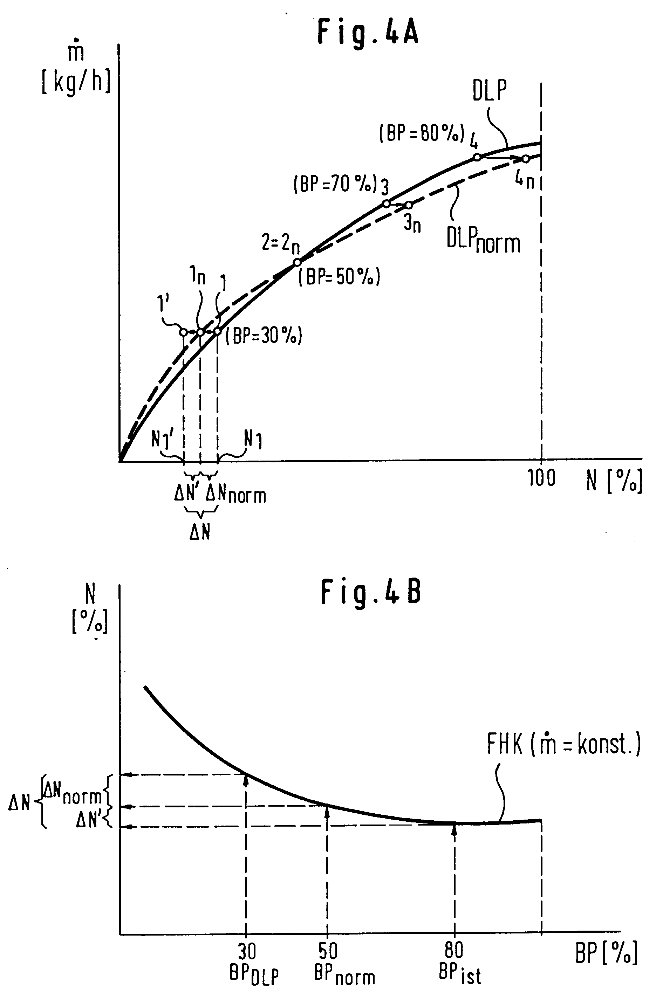

Anhand der Figuren 4A und 4B wird im folgenden eine alternative Vorgehensweise zur Korrektur des Stellsignalwertes N bei verschiedenen Dosierleistungen m beschrieben. Es handelt sich hierbei um ein zweistufiges Verfahren zur Ermittlung des Stellsignal-Differenzwertes $\Delta N$.

Nach der Bestimmung des Dosierleistungsprofils DLP durch Aufnahme der einzelnen Meßpunkte 1 - 4 gemäß Fig. 4A wird das durch diese Meßpunkte charakterisierte und bei unterschiedlichen Behälterpegeln aufgenommene Dosierleistungsprofil zunächst auf einen einheitlichen Behälterpegel normiert. Dieser Normier-Behälterpegel $BP_{norm}$ soll im dargestellten Beispiel 50 % betragen.

Die Normierung des Dosierleistungsprofils auf den Normier-Behälterpegel erfolgt in gleicher Weise wie die Korrektur des Stellsignal-Differenzwertes, wie sie anhand der Figuren 3A und 3B beschrieben worden ist. Stellvertretend für die Meßpunkte 2, 3 und 4 von Fig. 4A wird dies anhand des Meßpunktes 1 im folgenden beschrieben. Der Meßpunkt 1 von Fig. 4A wurde bei einem Behälterpegel von 30 % aufgenommen, so daß zunächst aus der Füllhöhenkompensationscharakteristik von Fig. 4B derjenige Stellsignalwert N ermittelt wird, der dem Behälterpegel von 30 % zugeordnet ist. Anschließend wird aus der Füllhöhenkompensationscharakteristik FHK derjenige Stellwert ermittelt, der dem Normier-Behälterpegel $BP_{norm}$ von 50 % zugeordnet ist. Die Differenz zwischen den beiden Stellwerten ist in Fig. 4B mit $\Delta N_{norm}$ bezeichnet. Die Berichtigung des Meßpunktes 1 des Dosierleistungsprofils DLP von Fig. 4A mittels dem Normier-Differenzwert $\Delta N_{norm}$ ergibt den Punkt $1_n$.

Wird eine derartige Normierung für alle Meßpunkte der DLP-Kurve durchgeführt, führt dies zu einem normierten Dosierleistungsprofil $DLP_{norm}$, das in Fig. 4A gestrichelt eingezeichnet ist.

Treten nun im Steuerbetrieb bei bestimmten Dosierleistungen Behälterpegel $BP_{ist}$ auf, die vom Normier-Behälterpegel $BP_{norm}$ abweichen, so wird in einer zweiten Stufe aus der Füllhöhenkompensationscharakteristik die Stellsignal-Abweichung $\Delta N'$ ermittelt, die aus dem Unterschied zwischen $BP_{ist}$ und $BP_{norm}$ resultiert. Der Stellsignal-Differenzwert $\Delta N'$ stellt einen Rest-Korrekturwert dar, mit dem der Meßpunkt $1_n$ von Fig. 4A nochmals berichtigt wird, was zu dem neuen Punkt 1' und zum korrigierten Stellsignalwert $N_1'$ führt.

Der Zwischenschritt aufgrund der Normierung des Dosierleistungsprofils ist bei der Ermittlung des Stellsignal-Differenzwertes $\Delta N$ vorteilhaft, da hiermit für unterschiedliche Meßpunkte des Dosierleistungsprofils, d.h. für unterschiedliche Dosierleistungen, ein feststehender Vergleichs-Behälterpegel geschaffen wird, mit dem im späteren Steuerungsbetrieb hiervon abweichende Behälterpegel verglichen werden können.

Auch bei der anhand der Figuren 4A und 4B beschriebenen Vorgehensweise werden unterschiedliche Dosierleistungen anhand der im Zusammenhang mit den Figuren 3A und 3B beschriebenen Berichtigungsfunktion berücksichtigt. Dies bedeutet, daß sowohl die aus der Füllhöhenkompensationscharakteristik ermittelten Normier-Korrekturwerte $\Delta N_{norm}$ als auch die Rest-Korrekturwerte $\Delta N'$ mit einem Berichtigungsfaktor multipliziert werden, der sich aus dem Verhältnis aus derjenigen Dosierleistung, die von der der Füllhöhenkompensationscharakteristik zugrundeliegenden Dosierleistung abweicht, und aus dieser letzteren Dosierleistung ergibt.

Arbeitspunkte auf dem Dosierleistungsprofil und der Füllhöhenkompensationscharakteristik, die zwischen den Meßpunkten liegen, bei denen diese Kurven aufgenommen worden sind, werden rechnerisch durch Interpolation, zweckmäßigerweise mittels einer linearen Interpolation, ermittelt. Weiterhin können auch Extrapolationsverfahren verwendet werden.

Zusätzlich zum Behälterpegel kann auch die Schüttgutdichte als Parameter abgespeichert werden. Dies ermöglicht es, daß die Differenzwerte $\Delta N$ zur Korrektur der Stellsignalwerte mittels eines Schüttgutdichte-Berichtigungsfaktors zusätzlich korrigiert werden.

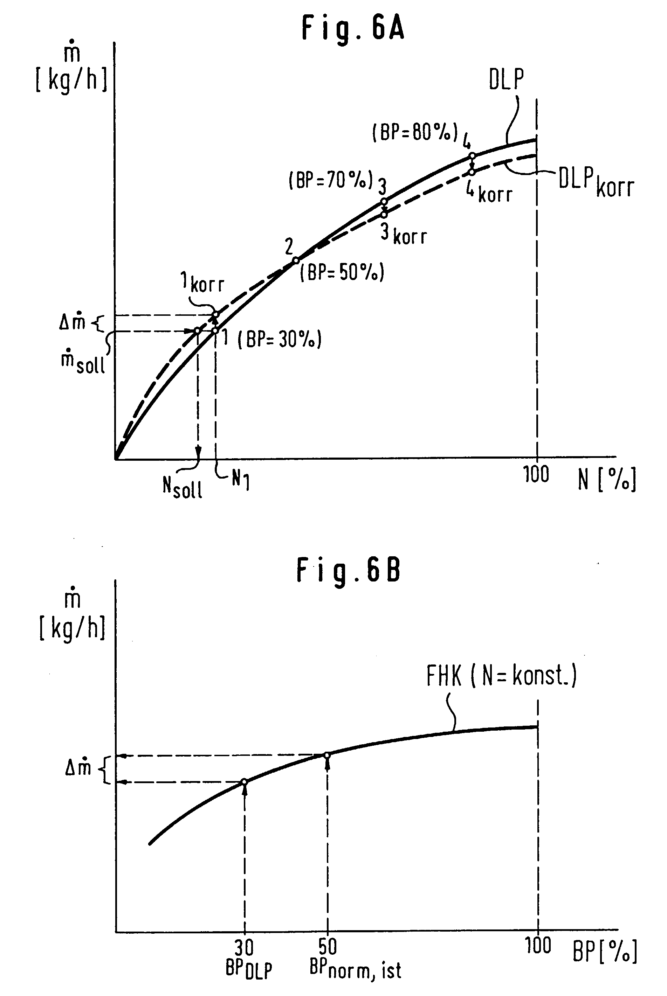

Aus Fig. 6A ist ein Dosierleistungsprofil DLP ersichtlich, das dem Dosierleistungsprofil von Fig. 4A entspricht. Zur Korrektur der Stellsignalwerte wird jedoch nicht die anhand von Fig. 4B beschriebene N/BP-Füllhöhenkompensationscharakteristik verwendet, sondern eine in Fig. 6B dargestellte $\dot{m}$/BP-Füllhöhenkompensationscharakteristik FHK. Diese Füllhöhenkompensationscharakteristik gibt an, wie sich die Ist-Dosierleistung in Abhängigkeit von unterschiedlichen Behälterpegeln bei einem konstanten Stellsignalwert ändert.

Zur Korrektur des Stellsignalwertes $N_1$ im Dosierleistungsprofil von Fig. 6A wird zunächst ein Dosierleistungs-Differenzwert $\Delta\dot{m}$ aus der Füllhöhenkompensationscharakteristik von Fig. 6B ermittelt. Diese Differenzwertermittlung erfolgt in gleicher Weise wie die Ermittlung des Stellsignal-Differenzwertes $\Delta N$ von Fig. 3B oder $\Delta N_{norm}$, $\Delta N'$ von Fig. 4B. Der Dosierleistungs-Differenzwert $\Delta\dot{m}$ führt im Dosierleistungsprofil von Fig. 6A zu einer Korrektur des Punktes 1, wodurch der Punkt $1_{korr}$ erhalten wird. Eine entsprechende Korrektur der Punkte 3 und 4 des Dosierleistungsprofils DLP führt zu den Punkten $3_{korr}$ und $4_{korr}$, die zusammen mit den Punkten $1_{korr}$ und 2 ein korrigiertes Dosierleistungsprofil $DLP_{korr}$ bestimmen. Aufgrund des korrigierten Dosierleistungsprofils kann nun für eine bestimmte Soll-Dosierleistung, beispielsweise $\dot{m}_{soll}$ in Fig. 6A, der korrigierte Stellwert $N_{soll}$ ermittelt werden.

Es ist zu beachten, daß für die Korrektur des Dosierleistungsprofils DLP in der Regel nicht nur ein einziger, sondern unterschiedliche Dosierleistungs-Differenzwerte $\Delta\dot{m}$ verwendet werden. Der jeweilige Differenzwert hängt dabei insbesondere von der Form der Füllhöhenkompensationskurve, dem Behälterpegel, bei dem die zu korrigierenden Punkte des Dosierleistungsprofils DLP ermittelt wurden, sowie vom Stellsignalwert N ab, bei dem die Füllhöhenkompensationskurve aufgenommen wurde. Ferner ist es auch bei der anhand der Fig. 6A und 6B beschriebenen alternativen Ausführungsform möglich, den Stellsignalwert N entweder in einem einstufigen oder auch in einem zweistufigen Verfahren entsprechend den Ausführungen zu Fig. 3A, 3B bzw. 4A, 4B zu korrigieren. Der Dosierleistungs-Differenzwert $\Delta\dot{m}$ kann auch in gleicher Weise wie der Stellsignal-Differenzwert $\Delta N$ mittels eines zusätzlichen Berichtigungsfaktors korrigiert werden, der sich aus dem Verhältnis eines bestimmten Stellsignalwertes zu demjenigen Stellsignalwert ergibt, bei dem die Füllhöhenkompensationscharakteristik aufgenommen wurde.

**Patentansprüche**

1. Verfahren zur Steuerung der Dosierleistung einer Differentialdosierwaage, bei dem in einer Dosiersteuerung während eines Steuerungsbetriebs ein vom Behälterpegel abhängiges Fördergeschwindigkeits-Stellsignal zum Erreichen oder Aufrechterhalten der gewünschten Dosierleistung verwendet wird,
   **gekennzeichnet durch** die Verfahrensschritte:

   a) Messung und Speicherung oder Eingabe eines geräte- und produktspezifischen Dosierleistungsprofils (DLP) in die Dosiersteuerung, bestehend aus unterschiedlichen Ist-Dosierleistungswerten und der zum Erreichen dieser Ist-Dosierleistungswerte erforderlichen Stellsignalwerte (N), wobei als zusätzlicher Parameter die jeweiligen Behälterpegel (BP) abgespeichert werden,

   b) Messung und Speicherung oder Eingabe einer Füllhöhenkompensationscharakteristik (FHK) in die Dosiersteuerung, bestehend aus zur Aufrechterhaltung einer oder mehrerer konstanter Dosierleistungen ($\dot{m}_{FHK}$) erforderlichen Stellsignalwerten (N) in Abhängigkeit von unterschiedlichen Behälterpegeln (BP),

   c) Ermittlung des Differenzwertes ($\Delta N$) zwischen demjenigen Stellsignalwert, der in der Füllhöhenkompensationscharakteristik dem als Parameter gespeicherten Behälterpegel ($BP_{DLP}$) des Dosierleistungsprofils (DLP) zugeordnet ist und demjenigen Stellsignalwert, der einem tatsächlichen Behälterpegel ($BP_{ist}$) zugeordnet ist und

   d) Steuern der Fördergeschwindigkeit mit einem Stellsignalwert, der aufgrund des Dosierleistungsprofils (DLP) einer vorgebbaren Dosierleistung zugeordnet und um den aus der Füllhöhenkompensationscharakteristik ermittelten Differenzwert ($\Delta N$) korrigiert ist.

2. Verfahren nach Anspruch 1, dadurch gekennzeichnet, daß der Stellsignal-Differenzwert ($\Delta N$) mittels eines Berichtigungsfaktors korrigiert wird, der aus dem Verhältnis einer bestimmten Dosierleistung ($\dot{m}$) zu derjenigen konstanten Dosierleistung ($\dot{m}_{FHK}$) besteht, bei der die Füllhöhenkompensationscharakteristik ermittelt wurde.

3. Verfahren nach Anspruch 1 oder 2, dadurch gekennzeichnet, daß das bei unterschiedlichen Behälterpegeln (BP) ermittelte Dosierleistungsprofil (DLP) mittels aus der Füllhöhenkompensationscharakteristik (FHK) gewonnener Normier-Korrekturwerte ($\Delta N_{norm}$) auf einen konstanten Normier-Behälterpegel($BP_{norm}$) normiert wird, wobei der Normier-Korrekturwert($\Delta N_{norm}$) einen ersten Anteil am Stellsignal-Differenzwert ($\Delta N$) bildet,
   und daß aus der Füllhöhenkompensationscharakteristik (FHK) ein Rest-Korrekturwert ($\Delta N'$) für die Korrektur des Stellsignals (N) auf der Basis des normierten Dosierleistungsprofils ($DLP_{norm}$) ermittelt wird, der zusammen mit dem entsprechenden Normier-Korrekturwert ($\Delta N_{norm}$) den gesamten Differenzwert ($\Delta N$) zur Korrektur des Stellsignals (N) ergibt, wobei der Rest-Korrekturwert ($\Delta N'$) aus der Differenz zwischen demjenigen Stellsignalwert ermittelt wird, der gemäß der Füllhöhenkompensationscharakteristik (FHK) dem Normier-Behälterpegel($BP_{norm}$) zugeordnet ist und demjenigen Stellsignalwert, der einem tatsächlichen Behälterpegel ($BP_{ist}$) zugeordnet ist.

4. Verfahren zur Steuerung der Dosierleistung einer Differentialdosierwaage, bei dem in einer Dosiersteuerung während eines Steuerungsbetriebs ein vom Behälterpegel abhängiges Fördergeschwindigkeits-Stellsignal zum Erreichen oder Aufrechterhalten der gewünschten Dosierleistung verwendet wendet wird,
   **gekennzeichnet durch** die Verfahrensschritte:

   a) Messung und Speicherung oder Eingabe eines geräte- und produktspezifischen Dosierleistungsprofils (DLP) in die Dosiersteuerung, bestehend aus unterschiedlichen Ist-Dosierleistungswerten ($\dot{m}$) und der zum Erreichen dieser Ist-Dosierleistungswerte erforderlichen Stellsignalwerte (N), wobei als zusätzlicher Parameter die jeweiligen Behälterpegel (BP) abgespeichert werden,

   b) Messung und Speicherung oder Eingabe einer Füllhöhenkompensationscharakteristik (FHK) in die Dosiersteuerung, bestehend aus Ist-Dosierleistungswerten ($\dot{m}$) in Abhängigkeit von unterschiedlichen Behälterpegeln (BP) bei einem oder mehreren konstanten Stellsignalwerten ($N_{FHK}$),

c) Ermittlung des Differenzwertes (Δṁ) zwischen demjenigen Dosierleistungswert, der in der Füllhöhenkompensationscharakteristik dem als Parameter gespeicherten Behälterpegel (BP_{DLP}) des Dosierleistungsprofils (DLP) zugeordnet ist und demjenigen Dosierleistungswert, der einem tatsächlichen Behälterpegel (BP_{ist}) zugeordnet ist, und

d) Steuern der Fördergeschwindigkeit mit einem Stellsignalwert, der aufgrund eines korrigierten Dosierleistungsprofils (DLP_{korr}) einer vorgebbaren Dosierleistung zugeordnet ist, wobei das korrigierte Dosierleistungsprofil (DLP_{korr}) um den aus der Füllhöhenkompensationscharakteristik ermittelten Differenzwert (Δṁ) korrigiert ist.

5. Verfahren nach Anspruch 4, dadurch gekennzeichnet, daß der Dosierleistungs-Differenzwert (Δṁ) mittels eines Berichtigungsfaktors korrigiert wird, der aus dem Verhältnis eines bestimmten Stellsignalwerts (N) zu demjenigen konstanten Stellsignalwert (N_{FHK}) besteht, bei dem die Füllhöhenkompensationscharakteristik ermittelt wurde.

6. Verfahren nach Anspruch 4 oder 5, dadurch gekennzeichnet, daß das bei unterschiedlichen Behälterpegeln (BP) ermittelte Dosierleistungsprofil (DLP) mittels aus der Füllhöhenkompensationscharakteristik (FHK) gewonnener Normier-Korrekturwerte auf einen konstanten Normier-Behälterpegel normiert wird, wobei der Normier-Korrekturwert einen ersten Anteil am Dosierleistungs-Differenzwert (Δṁ) bildet, und daß aus der Füllhöhenkompensationscharakteristik (FHK) ein Rest-Korrekturwert für die weitere Korrektur des Dosierleistungsprofils ermittelt wird, der zusammen mit dem entsprechenden Normier-Korrekturwert den gesamten Differenzwert (Δṁ) zur Korrektur des Dosierleistungsprofils ergibt, wobei der Rest-Korrekturwert aus der Differenz zwischen derjenigen Dosierleistung ermittelt wird, die gemäß der Füllhöhenkompensationscharakteristik (FHK) dem Normier-Behälterpegel zugeordnet ist und derjenigen Dosierleistung, die einem tatsächlichen Behälterpegel zugeordnet ist.

7. Verfahren nach einem der Ansprüche 1 bis 6, dadurch gekennzeichnet, daß die Schüttgutdichte des zu dosierenden Materials als zusätzlicher Parameter im Dosierleistungsprofil (DLP) abgespeichert und zur Korrektur des Stellsignalwertes (N) verwendet wird.

8. Verfahren nach einem der Ansprüche 1 bis 7, dadurch gekennzeichnet, daß zur Bestimmung des Dosierleistungsprofils (DLP) mehrere Ist-Dosierleistungswerte und die zum Erreichen dieser Ist-Dosierleistungswerte erforderlichen Stellsignalwerte (N) abgespeichert und weitere, insbesondere dazwischenliegende Werte durch vorzugsweise lineare Inter- bzw. Extrapolation bestimmt werden.

9. Verfahren nach Anspruch 8, dadurch gekennzeichnet, daß zur Bestimmung des Dosierleistungsprofils (DLP) drei bis zehn, vorzugsweise regelmäßig beabstandete Ist-Dosierleistungswerte bestimmt werden.

10. Verfahren nach einem der Ansprüche 1 bis 9, dadurch gekennzeichnet, daß mindestens ein aus dem Dosierleistungsprofil (DLP) und der Füllhöhenkompensationscharakteristik (FHK) bestimmter theoretischer Arbeitspunkt, der durch die Soll-Dosierleistung, den dieser zugeordneten korrigierten Stellsignalwert und den Behälterpegel (BP) vorgegeben ist, mit mindestens einem während des Regelungsbetriebes gemessenen Arbeitspunkt verglichen wird, der durch die gemessene Ist-Dosierleistung, den tatsächlichen Stellsignalwert des Reglers und den gemessenen Behälterpegel vorgegeben ist, und daß ein die Abweichung des theoretischen vom gemessenen Arbeitspunkt berücksichtigender Korrekturwert für die weitere Korrektur des theoretischen Stellsignalwertes für den Steuerungsbetrieb gebildet und/oder ein Alarm abgegeben wird, wenn die Abweichung des theoretischen Arbeitspunktes vom gemessenen Arbeitspunkt einen vorgebbaren Maximalwert überschreitet.

## Claims

1. Method of controlling the dosing performance of a differential dosing weigher, in which a delivery speed adjusting signal dependent upon the container level is used in a dosing control system during a control operation in order to achieve or maintain the desired dosing performance,
   **characterised by** the following procedural steps:

   a) measurement and storage or inputting, into the dosing control system, of an apparatus-specific and product-specific dosing performance profile (DLP) consisting of different actual dosing performance values and of the adjusting signal values (N) which are necessary for achieving the said actual dosing performance values, the respective container levels (BP) being stored away as additional parameters,

   b) measurement and storage or inputting, into the dosing control system, of a filling height compensation characteristic (FHK) consisting of adjusting signal values (N) which are necessary for maintaining one or more constant dosing performances ($\dot{m}_{FHK}$), in dependence upon different container levels (BP).

c) establishing of the difference value ($\Delta N$) between that adjusting signal value which is assigned, in the filling height compensation characteristic, to the container level ($BP_{DLP}$) of the dosing performance profile (DLP), which container level is stored as a parameter, and that adjusting signal value which is assigned to an actual container level ($BP_{ist}$), and

d) control of the delivery speed with an adjusting signal value which is assigned, on the basis of the dosing performance profile (DLP), to a predeterminable dosing performance, and by which the difference value ($\Delta N$) established from the filling height compensation characteristic is corrected.

2. Method according to claim 1, characterised in that the adjusting signal difference value ($\Delta N$) is corrected by means of a rectification factor which consists of the ratio of a specific dosing performance ($\dot{m}$) to that constant dosing performance ($\dot{m}_{FHK}$) at which the filling height compensation characteristic has been established.

3. Method according to claim 1 or 2, characterised in that the dosing performance profile (DLP) established at different container levels (BP) is normalised, by means of normalising correction values ($\Delta N_{norm}$) obtained from the filling height compensation characteristic (FHK), to a constant normalising container level ($BP_{norm}$), the normalising correction value ($\Delta N_{norm}$) forming a first component of the adjusting signal difference value ($\Delta N$),
and that there is established, from the filling height compensation characteristic (FHK), a remnant correction value ($\Delta N'$) for correcting the adjusting signal (N) on the basis of the normalised dosing performance profile ($DLP_{norm}$), which remnant correction value ($\Delta N'$) produces, in conjunction with the corresponding normalising correction value ($\Delta N_{norm}$), the overall difference value ($\Delta N$) for correcting the adjusting signal (N), the remnant correction value ($\Delta N'$) being established from the difference between that adjusting signal value which is assigned to the normalising container level ($BP_{norm}$) in accordance with the filling height compensation characteristic (FHK), and that adjusting signal value which is assigned to an actual container level ($BP_{ist}$).

4. Method of controlling the dosing performance of a differential dosing weigher, in which a delivery speed adjusting signal dependent upon the container level is used in a dosing control system during a control operation in order to achieve or maintain the desired dosing performance,
**characterised by** the following procedural steps:

a) measurement and storage or inputting, into the dosing control system, of an apparatus-specific and product-specific dosing performance profile (DLP) consisting of different actual dosing performance values ($\dot{m}$) and of the adjusting signal values (N) which are necessary for achieving the said actual dosing performance values, the respective container levels (BP) being stored away as additional parameters,

b) measurement and storage or inputting, into the dosing control system, of a filling height compensation characteristic (FHK) consisting of actual dosing performance values ($\dot{m}$) in dependence upon different container levels (BP) at one or more constant adjusting signal values ($N_{FHK}$),

c) establishing of the difference value ($\Delta\dot{m}$) between that dosing performance value which is assigned, in the filling height compensation characteristic, to the container level ($BP_{DLP}$) of the dosing performance profile (DLP), which container level is stored as a parameter, and that dosing performance value which is assigned to an actual container level ($BP_{ist}$), and

d) control of the delivery speed with an adjusting signal value which is assigned, on the basis of a corrected dosing performance profile ($DLP_{korr}$), to a predeterminable dosing performance, the corrected dosing performance profile ($DLP_{korr}$) being corrected by the difference value ($\Delta\dot{m}$) established from the filling height compensation characteristic.

5. Method according to claim 4, characterised in that the dosing performance difference value ($\Delta\dot{m}$) is corrected by means of a rectification factor which consists of the ratio of a specific adjusting signal value (N) to that constant adjusting signal value ($N_{FHK}$) at which the filling height compensation characteristic has been established.

6. Method according to claim 4 or 5, characterised in that the dosing performance profile (DLP) established at different container levels (BP) is normalised, by means of normalising correction values obtained from the filling height compensation characteristic (FHK), to a constant normalising container level, the normalising correction value forming a first component of the dosing performance differ-

ence value ($\Delta\dot{m}$), and that there is established, from the filling height compensation characteristic (FHK), a remnant correction value for the further correction of the dosing performance profile, which remnant correction value produces, in conjunction with the corresponding normalising correction value, the overall difference value ($\Delta\dot{m}$) for correcting the dosing performance profile, the remnant correction value being established from the difference between that dosing performance which is assigned to the normalising container level in accordance with the filling height compensation characteristic, and that dosing performance which is assigned to an actual container level.

7. Method according to one of claims 1 to 6, characterised in that the bulk product density of the material to be dosed is stored away as an additional parameter in the dosing performance profile (DLP), and used for correcting the adjusting signal value (N).

8. Method according to one of claims 1 to 7, characterised in that, in order to determine the dosing performance profile (DLP), a number of actual dosing performance values, and the adjusting signal values (N) necessary for achieving the said actual dosing performance values, are stored away, and other values, particularly ones which lie between them, are determined by preferably linear interpolation or extrapolation.

9. Method according to claim 8, characterised in that, in order to determine the dosing performance profile (DLP), three to ten actual dosing performance values, which are preferably spaced apart in a regular manner, are determined.

10. Method according to one of claims 1 to 9, characterised in that at least one theoretical working point, which is determined from the dosing performance profile (DLP) and the filling height compensation characteristic (FHK) and predetermined by the ideal dosing performance, the corrected adjusting signal value assigned to the latter, and the container level (BP), is compared with at least one working point which is measured during the regulating operation and predetermined by the actual dosing performance measured, the actual adjusting signal value of the regulator and the container level measured, and that a correction value, which takes account of the deviation of the theoretical working point from the measured working point, for the further correction of the theoretical adjusting signal value for the control operation is formed and/or an alarm is emitted, if the deviation of the theoretical working point from the measured working point exceeds a predeterminable maximum value.

**Revendications**

1. Procédé de commande de la capacité de dosage d'un dosimètre différentiel, dans lequel, afin d'atteindre ou de maintenir la capacité de dosage désirée, on utilise un signal de réglage de vitesse d'alimentation qui dépend du niveau de réservoir pendant un mode de commande dans une commande de dosage,
caractérisé par les étapes de procédé suivantes :

a) on mesure et on mémorise, ou on saisit un profil de capacité de dosage (DLP) spécifique à l'appareil et au produit, dans la commande de dosage, qui comprend différentes valeurs de capacité de dosage réelles, et les valeurs des signaux de réglage (N) nécessaires pour atteindre ces valeurs de capacité de dosage réelles, et l'on stocke en tant que paramètre additionnel le niveau respectif de réservoir (BP),
b) on mesure et on mémorise, ou on saisit une caractéristique de compensation (FHK) pour une hauteur de remplissage, dans la commande de dosage, qui comprend les valeurs du signal de réglage (N) nécessaires pour maintenir une ou plusieurs capacités de dosage constantes ($\dot{m}_{FHK}$) en fonction de différents niveaux de réservoir (BP),
c) on détermine la valeur différentielle ($\Delta N$) entre celle des valeurs du signal de réglage qui est associée, dans la caractéristique de compensation pour la hauteur de remplissage, au niveau de réservoir ($BP_{DLP}$), stocké en tant que paramètre, du profil de capacité de dosage (BLP), et celle des valeurs du signal de réglage qui est associée à un niveau réel dans le réservoir ($BP_{réel}$), et
d) on commande la vitesse d'alimentation avec une valeur du signal de réglage qui est associée à une capacité de dosage prédéterminée en se basant sur le profil des capacités de dosage (DLP), et qui est corrigée de la valeur différentielle ($\Delta N$) déterminée depuis la caractéristique de compensation pour la hauteur de remplissage.

2. Procédé selon la revendication 1, caractérisé en ce que la valeur différentielle du signal de réglage ($\Delta N$) est corrigée au moyen d'un facteur de correction, qui est formé par le rapport entre une capacité de dosage déterminée ($\dot{m}$) et la capacité de dosage constante ($\dot{m}_{FHK}$) pour laquelle on a déterminé la caractéristique de compensation pour la hauteur de remplissage.

3. Procédé selon l'une ou l'autre des revendications 1 et 2, caractérisé en ce que le profil de capacité de dosage (DLP) déterminé pour différents niveaux de réservoir (BP) est normalisé à un niveau de réservoir normalisé constant ($BP_{norm}$), au moyen de valeurs de correction de normalisation ($\Delta N_{norm}$) obtenues à partir de la caractéristique de compensation pour la hauteur de remplissage (FHK), et la valeur de correction de normalisation ($\Delta N_{norm}$) forme une première composante pour la valeur différentielle du signal de réglage ($\Delta N$),
et en ce que l'on détermine à partir de la caractéristique de compensation pour la hauteur de remplissage (FHK) une valeur de correction restante ($\Delta N'$) pour la correction du signal de réglage (N) en se basant sur le profil de capacité de dosage normalisée (DLPnorm), laquelle produit, ensemble avec la valeur de correction de normalisation correspondante ($\Delta N_{norm}$) la valeur différentielle totale ($\Delta N$) pour corriger le signal de réglage (N), la valeur de correction restante ($\Delta N'$) étant déterminée à partir de la différence entre celle des valeurs de signal de réglage qui est associée au niveau de réservoir normalisé ($BP_{norm}$) d'après la caractéristique de compensation pour la hauteur de remplissage (FHK), et celle des valeurs du signal de réglage qui est associée à un niveau réel dans le réservoir ($BP_{réel}$).

4. Procédé pour commander la capacité de dosage d'un dosimètre différentiel, dans lequel, afin d'atteindre ou de maintenir la capacité de dosage désirée, on utilise un signal de réglage de vitesse d'alimentation qui dépend du niveau de réservoir pendant un mode de commande dans une commande de dosage,
caractérisé par les étapes de procédé suivantes :

a) on mesure et on mémorise, ou on saisit un profil de capacité de dosage (DLP) spécifique à l'appareil et aux produits, dans la commande de dosage, qui comprend différentes valeurs de capacité de dosage réelles ($\dot{m}$), et les valeurs des signaux de réglage (N) nécessaires pour atteindre ces valeurs de capacité de dosage réelles, et l'on stocke en tant que paramètre additionnel le niveau respectif de réservoir (BP),
b) on mesure et on mémorise, ou on saisit une caractéristique de compensation (FHK) pour une hauteur de remplissage, dans la commande de dosage, qui comprend les valeurs du signal de réglage réelles ($\dot{m}$) en fonction de différents niveaux de réservoir (BP) à une ou plusieurs valeurs de signal de réglage constantes ($N_{FHK}$),
c) on détermine la valeur différentielle ($\Delta \dot{m}$) entre celle des valeurs de la capacité de dosage qui est associée, dans la caractéristique de compensation pour la hauteur de remplissage, au niveau de réservoir ($BP_{DLP}$), stocké en tant que paramètre, du profil de capacité de dosage (DLP), et celle des valeurs de la capacité de dosage qui est associée à un niveau réel dans le réservoir ($BP_{réel}$), et
d) on commande la vitesse d'alimentation avec une valeur du signal de réglage qui est associée à une capacité de dosage prédéterminée en se basant sur le profil des capacités de dosage corrigées ($DLP_{corr}$), le profil des capacités de dosage corrigées ($DLP_{corr}$) étant corrigé de la valeur différentielle ($\Delta \dot{m}$) déterminée depuis la caractéristique de compensation pour la hauteur de remplissage.

5. Procédé selon la revendication 4, caractérisé en ce que la valeur différentielle de la capacité de dosage ($\Delta \dot{m}$) est corrigée au moyen d'un facteur de correction, formé par le rapport entre une valeur de signal de réglage déterminée (N), et celle des valeurs de signal de réglage constantes ($N_{FHK}$) pour laquelle on a déterminé la caractéristique de compensation pour la hauteur de remplissage.

6. Procédé selon l'une ou l'autre des revendications 4 et 5, caractérisé en ce que le profil de capacité de dosage (DLP) déterminé pour différents niveaux de réservoir (BP) est normalisé à un niveau de réservoir normalisé constant, au moyen de valeurs de correction de normalisation obtenues à partir de la caractéristique de compensation pour la hauteur de remplissage (FHK), la valeur de correction de normalisation formant une première composante de la valeur différentielle de la capacité de dosage ($\Delta \dot{m}$), et en ce que l'on détermine à partir de la caractéristique de compensation pour la hauteur de remplissage (FHK) une valeur de correction restante pour la suite de la correction du profil de capacité de dosage, laquelle produit, ensemble avec la valeur de correction de normalisation correspondante, la valeur différentielle totale ($\Delta \dot{m}$) pour la correction du profil de capacité de dosage, et la valeur de correction restante étant déterminée par la différence entre celle des capacités de dosage qui est associée au niveau de réservoir normalisé, d'après la caractéristique de compensation pour la hauteur de remplissage (FHK), et celle des capacité de dosage qui est associée à un niveau de réservoir réel.

7. Procédé selon l'une des revendications 1 à 6, caractérisé en ce que l'épaisseur du matériau en vrac à doser est mémorisée comme paramètre additionnel dans le profil de capacité de dosage (DLP) et est utilisée pour la correction de la valeur du signal de réglage (N).

8. Procédé selon l'une des revendications 1 à 7, caractérisé en ce que pour déterminer le profil des capacités de dosage (DLP), on mémorise plusieurs valeurs de capacité de dosage réelles, et les valeurs du signal de réglage (N) nécessaires pour atteindre ces valeurs de capacité de dosage réelles, et l'on détermine d'autres valeurs, en particulier des valeurs intermédiaires, par une interpolation ou une extrapolation, avantageusement linéaire.

9. Procédé selon la revendication 8, caractérisé en ce que, pour déterminer le profil des capacités de dosage (DLP), on détermine trois à dix valeurs de dosage réelles espacées, de préférence régulièrement.

10. Procédé selon l'une des revendications 1 à 9, caractérisé en ce qu'au moins un point de travail théorique déterminé à partir du profil de capacité de dosage (DLP) et de la caractéristique de compensation pour la hauteur de remplissage (FHK), ce point de travail étant prédéterminé par la capacité de dosage nominale, par la valeur de signal de réglage corrigée associée à cette capacité de dosage nominale, et par le niveau de réservoir (BP), est comparé à au moins à un point de travail mesuré pendant le mode de régulation, lequel est prédéterminé par la capacité de dosage réelle mesurée, par la valeur de signal de réglage réelle du régulateur, et par le niveau de réservoir mesuré, et en ce que l'on forme une valeur de correction, qui tient compte de l'écart entre le point de travail théorique et le point de travail mesuré, pour la poursuite de la correction de la valeur du signal de réglage théorique pour le mode de commande, et/ou que l'on délivre une alarme lorsque l'écart entre le point de travail théorique et le point de travail mesuré dépasse une valeur maximum prédéterminée.

# Fig.1

DOSIERSTEUERUNG

$\frac{dm}{dt}$

$\dot{m}_{soll}$

# Fig. 2A

# Fig. 2B

# Fig. 3A

# Fig. 3B

# Fig.4A

# Fig.4B

# Fig. 5

$$\dot{m}_4 > \dot{m}_3 > \dot{m}_2 > \dot{m}_1$$

$\dot{m}_4 = \text{konst.}$

$\dot{m}_3 = \text{konst.}$

$\dot{m}_2 = \text{konst.}$

$\dot{m}_1 = \text{konst.}$

N [%]

BP [%]

EP 0 632 255 B1

# Fig. 6A

# Fig. 6B